# EUROPÄISCHE PATENTANMELDUNG

(11) **EP 1 747 728 A1**
(43) Veröffentlichungstag der Anmeldung: **31.01.2007**
(21) Anmeldenummer: 06015411.9
(22) Anmeldetag: 25.07.2006
(51) Int. Cl.: A23C 19/076, A01J 25/00

(54) **Verfahren zur verbrauchsfertigen Verpackung von Speisequark**

(30) Priorität: 26.07.2005 DE 102005035499
(71) Anmelder: Hassia Verpackungsmaschinen GmbH, D-63691 Ranstadt (DE); Pitzel, Dirk, 78315 Radolfzell (DE)
(72) Erfinder: Pitzel, Dirk, D 78315 Radolfzell (DE); Gellings, Ulrich, 40597 Düsseldorf (DE)
(74) Vertreter: Wolf, Günter

(57) **Zusammenfassung**

Die Erfindung betrifft Verfahren zur verbrauchsfertigen Verpackung von Speisequark in Behälter (B), wobei die zu fermentierende Milch bzgl. ihrer Inhaltsstoffe eingestellt und vorkonzentriert wird. Ein solches Verfahren besteht nach der Erfindung darin, daß die vorkonzentrierte Milch unmittelbar vor ihrer Abfüllung in die Verpackungsbehälter (B) mit Lab und Fermentationskulturen versetzt und durchmischt in noch flüssiger Form in die Behälter (B) dosiert abgefüllt wird, die Behälter (B) mit einer Deckfolie (3) verschlossen werden und die Füllung im verschlossenen Behälter (B) zur Absetzung der noch enthaltenen Molke in einen durch eine permeable Trennwand (6) abgeteilten, bodenseitigen Hohlraum des jeweiligen Behälters (B) sich selbst überlassen wird. Eine insofern davon unabhängige Verfahrensvariante besteht dabei darin, als bei dieser die vorkonzentrierte Milch in ein permeables Behältnis (B') eindosiert und mit diesem Behältnis in den eigentlichen Verpackungsbehälter eingebracht wird, der auch hierbei einen Hohlraum zur Sammlung sich absetzender Flüssigkeit bzw. Molke aufweist.

## Beschreibung

Die Erfindung betrifft Verfahren zur verbrauchsfertigen Verpackung von insbesondere Speisequark, gemäß Oberbegriff der unabhängigen Patentansprüche 1 und 2. Die Erfindung bezieht sich außerdem auf die für die Durchführung der Verfahren erforderlichen Verpackungsmaschinen und auch auf die notwendige besondere Ausgestaltung der zu verwendenden Verpackungsbehältnisse.

Soweit bekannt, ist es nach wie vor üblich, Quark bzw. Speisequark aus Milch in geeignet großen Chargen verbrauchsfertig aufzubereiten und dann aus der Charge, portionsweise auf Verpackungsgröße abgestellt, in die Verpackungsbehältnisse einzubringen. In der Regel erfolgt dies auf Verpackungsmaschinen, in denen der Quark in geeignete Behältnisse abgefüllt und diese anschließend verschlossen werden. Bei diesen Maschinen handelt es sich u.a. um Tiefziehmaschinen oder andere Abfüllmaschinen, wobei taktgeförderte und zu Behältnissen ausgeformte Packstoffbahnen oder auch vorgefertigte Einzelbehältnisse zur Verarbeitung kommen.

Was die Aufbereitung der Milch zu verbrauchbaren und abdosierbaren Quark betrifft, so sind, soweit bekannt, bislang drei Verfahren bekannt:
Beim so genannten und althergebrachten Quarksackverfahren wird die Milch bzg1. ihrer Inhaltsstoffe entsprechend eingestellt und pasteurisiert. Danach wird die Milch eingelabt und gesäuert. Die dick gelegte und gesäuerte Milch wird dann durchmischt und anschließend in Leinensäcke abgefüllt, um die Molke abfließen lassen bzw. abtrennen zu können. Der insoweit trockene Quark wird dann anschließend manuell in geeignete Einzelpackungen abgefüllt.

Beim so genannten Separator-Verfahhren wird die Milch ebenfalls bzgl.ihrer Inhaltsstoffe eingestellt, und in einem Chargentank kommen Lab und Fermentations-Bakterienkulturen hinzu, um auch hier die Milch wieder dick und sauer zu legen und im Tank mittels eines Rührwerkes zu durchmischen. Nach gründlicher Durchmischung wird die saure Milch über einen Quark-Separator gefahren, um die Molke vom Eiweiß abzutrennen und den insoweit trocknen Quark via Silo einer Abfüllmaschine zwecks Abdosierung zuzuleiten.

Beim moderneren Ultra-Filtrationsverfahren wird die Milch ebenfalls eingestellt und mittels Lab und Fermentations-Bakterienkulturen dick gelegt und in einem Tank mittels Rührwerk durchmischt. Nach gründlicher Durchmischung wird die saure Milch durch eine Ultra-Filtrationsanlage gefahren und die Molke vom Eiweiß abgetrennt, sowie der trockene Quark via Silo einer Abfüllmaschine zwecks Abdosierung in geeignete Behältnisse zugeleitet.
Wie ersichtlich, verlangen diese bisher üblichen Verfahren eine sowohl beträchtlich zeit- als auch apparativ aufwendige Prozeßtechnologie, die es zu reduzieren gilt, d.h., der Erfindung liegt die Aufgabe zugrunde, und zwar ausgehend insbesondere vom vorerläuterten Ultra-Filtrationsverfahren, rationell durchzuführende Verfahren und dafür geeignete Verpackungsmaschinen zu schaffen und auch geeignete Verpackungsformen zur Anwendung zu bringen, mit denen der bisher übliche und notwendige Technologieaufwand wesentlich reduzierbar ist.

Diese Aufgabe ist hinsichtlich des Verfahrens nach der Erfindung durch die im Kennzeichen des unabhängigen Patentanspruches 1 angeführten Merkmale gelöst.

An der verkaufs- bzw. verbrauchsfertigen Zubereitung des Quarkes ändert sich also im Prinzip nichts, nur erfolgt die Dicklegung und Säuerung des Quarkes entscheidend nicht mehr in der Phase der Quarkvorbereitung vor der Abfüllung, sondern diese werden gezielt erst in der gefüllten und versiegelten Verpackung, dort sich selbst überlassen, vollzogen.

Eine zweite Lösung der gestellten Aufgabe ergibt sich nach dem unabhängigen Patentanspruch 2. Bei diesem zweiten Verfahren ist also die gemäß dem ersten Verfahren benutzte permeable Trennwand durch ein permeables Behältnis ersetzt, das zusammen mit seiner Füllung in den flüssigkeitsdichten, eigentlichen Verpackungsbehälter eingebracht wird, der, wie gehabt, verschlossen wird und so zum Verkauf kommt.

Erfindungsgemäß wesentlich ist dabei in beiden Fällen, daß die Verfahren rationell an einer getaktet-kontinuierlich geförderten Packstoffbahn vollzogen werden.

Die dabei zur Durchführung beider Verfahren benutzten, so genannten FFS-Verpackungsmaschinen, wobei F für Formen, des zweite F für Füllen und S für Schließen steht, bedürfen insofern einer erfinderischen Anpassung gemäß der abhängigen Patentansprüche 3 und 4, d.h., bei der Verformung der Packstoffbahn auf einer solchen FFS-Verpackungsmaschine muss dafür gesorgt werden, dass beim Verfahren der ersten Art in einer integrierten Zwischenstation zwischen der Form- und Füllstation die permeable Trennwand in geeigneter Weise eingebracht wird, was beim zweiten Verfahren insofern anders ist, als hierbei die vorher abdosierte Quarkcharge zusammen mit einem permeablen Behältnis in den eigentlichen Verkaufsbehälter gelangt, der aber wiederum einen Sammelraum für die ablaufende Molke aufweisen muss.

Die ebenfalls für beide Verfahren geeignete Gestaltung der Aufnahme- bzw. Verkaufsbehälter steht dabei im engstem Zusammenhang mit dieser neuen, rationellen Verfahrensweise und hat zudem noch den Vorteil, dass dem Verbraucher nicht nur der Quark zur Verfügung steht sondern auch die sich aus der Gesamtfüllung abgesetzte Molke, deren Verzehr unter Gesundheitsaspekten ja durchaus für den Verbraucher von Interesse ist bzw. sein kann.

Das Angebot derartiger Milchprodukte, bei denen in der Verpackung der Feststoffanteil vom Flüssiganteil weitestgehend getrennt ist, ist zwar nach der DE-A-25 00 224 bekannt, hierbei wird aber der ganze Produktansatz unkonzentriert mit in Bezug auf das verfügbare Bechervolumen reduziertem Volumen in einzeln hergestellte Zweikammerbecher eingefüllt, die danach verschlossen und über Kopf gelagert werden, um zunächst die Füllung sich eindicken und nach Aufrichtung der Becher die sich zunächst nach oben abgesetzte Flüssigkeit in die andere Kammer abtropfen bzw. sich dort sammeln zu lassen. Abgesehen vom Aufwand der Herstellung und Verwendung von Einzelbechern, ist dieser mehr als ein Vierteljahrhundert alte Vorschlag mit seiner aufwendigen Handhabung unter den aktuellen Kostenbedingungen, so er denn überhaupt jemals praktiziert wurde, heute nicht mehr praktikabel.

Die erfindungsgemäßen Verfahren, die für deren Durchführung erfindungsgemäß ausgestalteten Verpackungsmaschinen und auch die dafür geeignet kontinuierlich verarbeitbar ausgebildeten becher- bzw. schalenförmigen Behälter werden anhand der zeichnerischen Darstellung von Ausführungsbeispielen nachfolgend näher erläutert.

Es zeigt
- Fig.1: schematisch und in Seitenansicht eine FFS-Verpackungsmaschine für das erste Verfahren;
- Fig.2: schematisch und Draufsicht den hier interessierenden Abschnitt einer FFS-Verpackungsmaschine für das zweite Verfahren;
- Fig.3: perspektivisch einen der an einer kontinuierlich-getaktet geförderten Packstoffbahn ausgeformten Behälter mit der für Speisequark üblichen Schalenform und mit der erfindungsgemäßen bodenseitigen Volumenerweiterung;
- Fig.4: einen Schnitt längs Linie II-II in Fig.3 durch die Verpackung in besonderer Ausführungsform;
- Fig.5: Draufsichten auf die Verpackungsform gemäß Fig.4 mit besonderen Ausführungsformen der Volumenerweiterungen;
- Fig.6: perspektivisch eine besondere Ausführungsform der Trennwand und
- Fig.7: im Schnitt eine weitere Ausführungsart der Trennwand vor der Einbringung in den darunter dargestellten, erfindungsgemäßen Verpackungsbehälter.

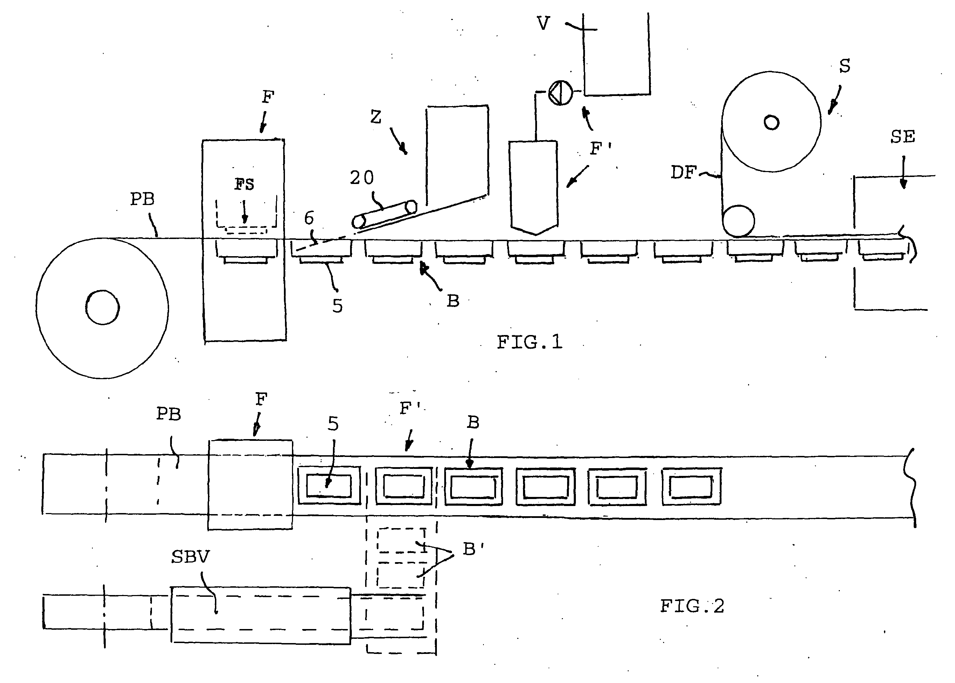

Bei der in Fig.1 stark schematisiert dargestellten FFS-Verpackungsmaschine ist die Formstation, in der die Behälter B fortlaufend an der kontinuierlich-getaktet durch die Maschine geförderten Packstoffbahn PB in bekannter Weise durch Tiefziehen ausgeformt werden, mit F bezeichnet. Die mit F' bezeichnete Füllstation erhält von einem Vorratsbehälter V aus das vorkonzentrierte Füllgut, und mit S ist die Schließstation bezeichnet, in der auf die Packstofbahn und damit auf die gefüllten Behälter B eine Deckfolie DF aufgesiegelt wird. Mit einer zur Maschine gehörenden oder beigestellten Schneideinrichtung SE werden die fertig gefüllten und verschlossenen Behälter B einzeln oder gegf. auch in Gruppen von der Packstoffbahn PB abgetrennt.

Eine solche bekannte FFS-Verpackungsmaschine ist für die Durchführung des zitierten und erfindungsgemässen Verfahrens noch nicht geeignet, d.h., zwischen der zur Ausbildung eines bodenseitigen Hohlraumes 5 in den Behältern B ausgebildeten Formstation F mit einem entsprechend ausgebildeten Formstempel FS und der Füllstation F' ist eine Zwischenstation Z für die getaktete Einbringung der permeablen Trennwände 6 in die Behälter B angeordnet. In dieser Zwischenstation Z werden passgerechte Zuschnitte der Trennwände 6, die gegf. auch von einer Vorratsrolle abgeschnitten werden können, mit geeigneten Einrichtungen 20 in die Behälter B eingebracht.

Auch für das zweite erfindungsgemäße und vorzitierte Verfahren ist eine normale FFS-Maschine der oben genannten Art nicht geeignet, d.h., auch hierbei ist die Formstation F zur Ausformung eines bodenseitigen Hohl- bzw. Flüssigkeitssammelraumes 5 in den Behältern B ausgebildet, und der Füllstation F' ist unter Verweis auf Fig.2 eine Schlauchbeutelverpackungsmaschine SBV für die Herstellung und Befüllung der Behältnisse B' zugeordnet, wobei zwischen dieser und der Füllstation F' Einrichtungen E zur Über- und Eingabe der Behältnisse B' in die Behälter B der Packstoffbahn PB angeordnet sind.

Da es zu den bereits vorzitierten, erfindungsgemäßen Verfahrensweisen nichts Zusätzliches zu erläutern gibt, kann sich das Nachfolgende im Wesentlichen auf die Gestaltung der Verpackung konzentrieren, zumal sich dabei automatisch das entscheidende Merkmal der Molkentrennung bei der Selbstüberlassung der Dicklegung und Säuerung erst in der Quarkverpackung mit ergibt.

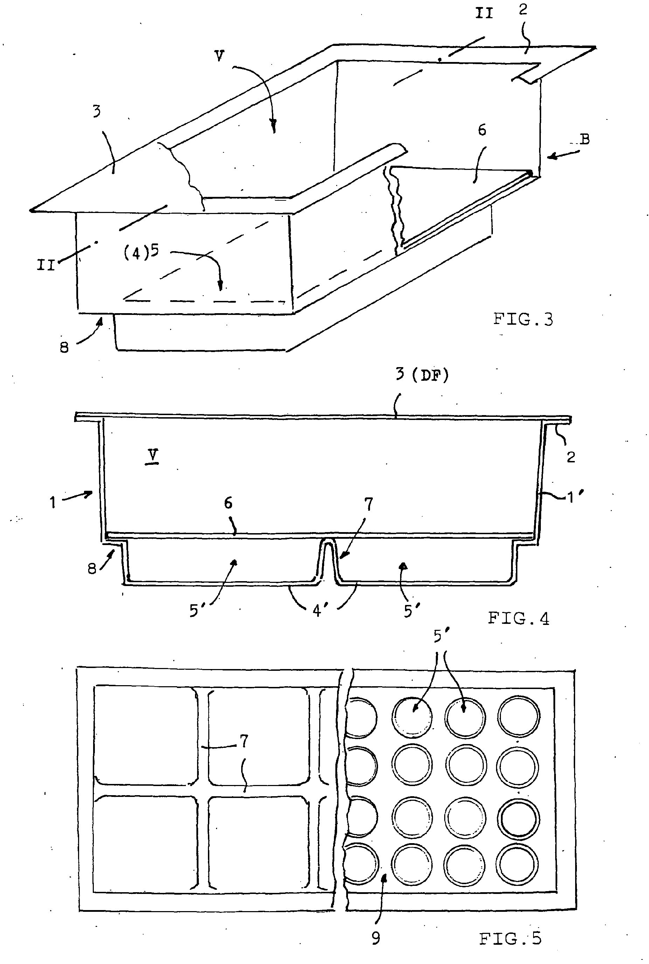

Zunächst sei darauf hingewiesen, dass die in den Fig.3 bis 7 als Einzelstücke dargestellten Behälter B in Übereinstimmung mit Fig.1,2 erfindungswesentlich in einer Packstoffbahn PB zusammenhängende Teile bilden, die erst nach Füllung und Verschluß in einer Schneid- bzw. Stanzeinrichtung SE einzeln oder in Gruppen abgetrennt werden. Außerdem sei darauf hingewiesen, dass die Behälter B im Gegensatz zu den Darstellungen in den Fig.1,2 auch mehrreihig in einer entsprechend breit bemessenen Packstoffbahn PB eingeformt werden können.

Der Behälter B zur Durchführung der Verfahren besteht unter Verweis auf die Fig.3 aus einem mehr oder weniger tiefen bspw. flach-trogfömigen, das Aufnahmevolumen V umschließenden Gebilde 1 mit Boden und mit Flanschrand 2 zum Aufsiegeln einer Deckfolie 3 (DF), wobei der Boden 4 des trogförmigen Gebildes 1 zu einem in Bezug auf das eigentliche Aufnahmevolumen V für den einzubringenden Quark angemessen kleineren Hohlraum 5 ausgeformt und der Hohlraum 5 durch eine permeable Trennwand 6 gegen das Aufnahmevolumen V abgeteilt ist.

Das Aufnahmevolumen V für die erfindungsgemäß vorkonzentrierte aber noch fließfähige und unmittelbar vor der Eindosierung mit Lab und Fermentations-Bakterienkulturen versetzte Milch ist dabei so zu bemessen, dass für eine bestimmte per Packung anzubietende Quarkmenge (bspw. 250 g) die etwas größere Menge bzw. das etwas größere, noch die Molke enthaltende Volumen an Flüssigmasse im Aufnahmevolumen untergebracht werden kann.

Um der aus einem geeigneten Vliesmaterial oder ggf. auch aus feingelochter, angemessen formstabilen Folie gebildeten permeablen Trennwand 6, die bei Füllgutbelastung nicht in den Hohlraum 5 durchhängen sollte, eine tragende Unterstützung zu bieten, ist vorteilhaft vorgesehen, den aus dem Boden 4 gebildete bzw. ausgeformte Hohlraum 5 in mehrere entsprechend kleinere Hohlräume 5' auszubilden, die in beispielsweiser Ausführungsform im rechten Teil der Fig.5 als kleine ausgeprägte Näpfchen ausgeformt sein können. Diesbezüglich ist es aber auch möglich, den den Hohlraum 5 nach unten abschließenden Boden 4' mit die Trennwand 6 tragenden Rippenprägungen 7 zu versehen, wie dies in Fig.4 und in Draufsicht auch im linken Teil der Fig.5 mit angedeutet ist.

Um für die permeable Trennwand 6 im Behälter eine geeignete Randauflage zu schaffen, ist der Behälter B zwischen dem Aufnahmevolumen V und dem Hohlraum 5 mit einer umlaufenden Stufe 8 versehen, auf der die permeable Trennwand 6 vorteilhaft mindestens punktuell in geeigneter Weise bspw. durch Ansiegeln im Behälter fixiert werden kann, sofern dies die Stabilität der Trennwand 6 verlangt. Eine solche punktuelle Fixierung der Trennwand 6 ist aber auch an sonstigen Auflagestellen, nämlich den vorerwähnten Rippenprägungen 7 oder den Zwischenflächen 9 zwischen den ausgeprägten Hohlräumen 5' bzw. Näpfchen möglich.

Um die sich in den Hohlräumen 5, 5' abgesetzte Molke einem Austrinken besser zugänglich zu machen, kann die Trennwand 6 mit geeigneten Mitteln zur Aufreiß- oder Entnahmeerleichterung versehen werden, was keiner besonderen Erläuterung und Darstellung bedarf, da solche Mittel in der Verpackungstechnik hinlänglich bekannt sind.

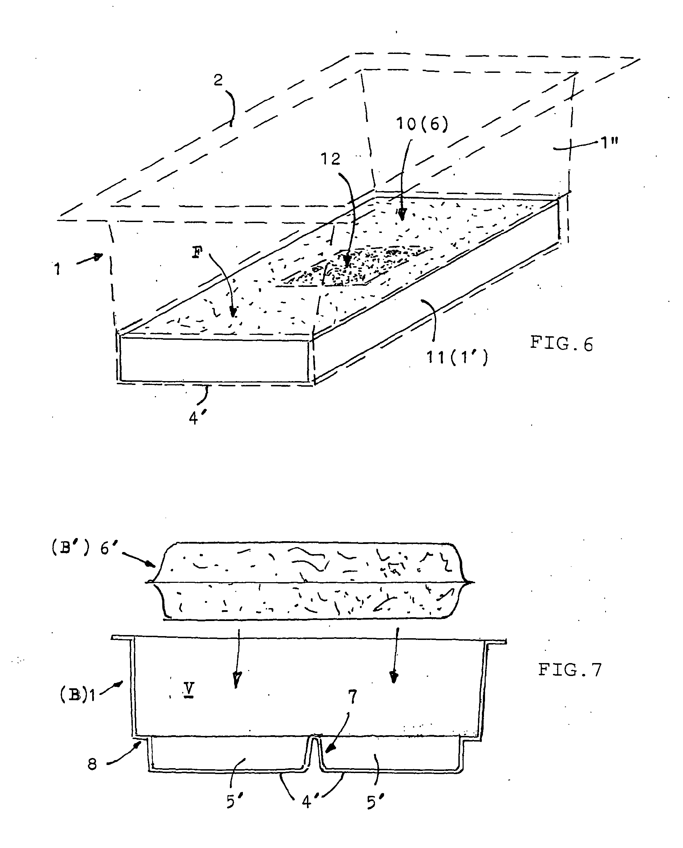

Eine besondere Ausführungsform der Trennwand ist in Fig.6 verdeutlicht, welche Ausführungsform einer komplikationslosen Einbringung in das Gebilde 1 besonders einfach zugänglich ist.

Hierbei ist, wie aus Fig.6 ersichtlich, die permeable Trennwand 6 als lose in das Gebilde 1 einbringbarer Einsatz 10 ausgebildet, d.h., dieser Einsatz, natürlich angepaßt an Form und Abmessungen des Gebildes 1, hat ebenfalls flache Trogform und steht nach Einbringen in das Gebilde 1 gewissermaßen über Kopf in diesem, und zwar nach unten zum Boden 4' hin offen. Die Seitenwände 1' der flachen Trogform eines solchen Einsatzes bilden hierbei Distanzhalteelemente 11, die die permeable Fläche F dieses Einsatzes 10 in erforderlicher Distanz zum Boden 4' des Gebildes 1 halten, das in Fig.6 gestrichelt mit angedeutet ist. Auch für einen solchen Einsatz 10 können tragende Formgebungen im Boden 4' des Gebildes 1 im Bedarfsfall vorgesehen sein. Bei diesem Einsatz 10 handelt es sich also um eine bspw. durch ein geeignetes Formverfahren denkbar einfach herstellbare Schale aus verformbaren und formstabil bleibenden Vliesmaterial oder ggf. auch aus dünner aber dennoch ausreichend formstabiler und vorgelochter Folie. Ein solcher Einsatz 10 macht die Ausformung eines Hohlraumes 5 im Boden des eigentlichen Behälters B vorteilhaft entbehrlich, bei dem es sich dann nicht mehr um einen Zweikammerbehälter handeln muß.
Um die permeable Trennwand 6, egal ob es sich dabei um einen Einsatz 10 gemäß Fig.6 handelt oder um einfache, ebenflächige Folien- oder Vlieszuschnitte mit in der Verpackungstechnik üblichen Übergabeeinrichtungen bzw.-mechaniken in die Gebilde 1 einbringen zu können, wobei im vorliegenden Fall wegen der Permeabilität der Trennwände 6 einerseits Saugübernahmen nicht ohne weiteres in Betracht gezogen werden können und auch keine seitliche Erfassung durch Greifer, denen die Seitenwände 1' des Gebildes 1 entgegenstünden, besteht eine vorteilhafte Ausführungsform der Trennwände 6 darin, daß die permeable Trennwand 6 in einem Teilbereich 12 ihrer ansonsten durchlässigen Fläche F undurchlässig ausgebildet ist. Dieser Teilbereich 12 ist mit Rücksicht auf die Absetzbarkeit der Molke so klein wie möglich und mit Rücksicht auf die Ansaugbarkeit so groß wie nötig zu bemessen. Durch einen solchen undurchlässigen Teilbereich sind übrigens hohe am Übergabeelement anzusetzende Ansaugdrücke umgehbar.

Für alle vorerwähnten Arten von Trennwänden 6 stehend, ist dies in Fig.6 bspw. mit angedeutet, wobei der undurchlässige oder undurchlässig gemachte Teilbereich 12 vorzugsweise mittig in der Fläche F angeordnet ist.
Dadurch ist, wie ohne weiteres vorstellbar, die Möglichkeit geschaffen, mit für den vorliegenden Zweck geeigneten pneumatisch nach dem Saugprinzip arbeitenden Auf- und Übergabemechaniken und zwar ziel- und plazierungsgenau die Trennwände 6 aus einer geeigneten Bevorratung zu entnehmen und in die Gebilde 1 einzulegen.

Die Fig.7 verdeutlicht schlielich die zweite Verfahrensart, bei der eine vorherige Bestückung des Gebildes 1 bzw. des Behälters B vor der Füllguteingabe mit einer permeablen Trennwand 6 entbehrlich ist, da hierbei unter Verweis auf Fig.2 das Füllgut zunächst in einen Schlauchbeutel 6' aus permeablen Material auf einer Schlauchbeutelmaschine SBV abdosiert und mit diesem zusammen in den Behälter B über eine geeignete über- und Eingabeeinrichtung E eingebracht wird. Danach erfolgt unter Verweis auf Fig.1 ebenfalls der Verschluß der in der Packstoffbahn PB enthaltenen und gefüllten Behälter B mit einer Deckfolie 3 bzw. DF.

## Patentansprüche

1. Verfahren zur verbrauchsfertigen Verpackung von Speisequark in Behälter (B), wobei die zu fermentierende Milch bzgl. ihrer Inhaltsstoffe eingestellt und vorkonzentriert wird,
**dadurch gekennzeichnet,**
**dass** die vorkonzentrierte Milch unmittelbar vor ihrer portionierten Abfüllung mit Lab und Fermentationskulkuren versetzt, durchmischt und dann in noch flüssiger Form in auf einer FFS-Verpackungsmaschine in eine getaktet geförderte Packstoffbahn (PB) ausgeformten Behälter (B) dosiert abgefüllt wird, die in der Packstoffbahn noch zusammenhängenden Behälter (B) mit einer Deckfolie verschlossen werden und die Füllung in den von der Packstoffbahn einzeln oder in Gruppen abgetrennten Behältern (B) zur Absetzung der noch enthaltenen Molke in einen durch eine permeable Trennwand abgeteilten, bodenseitigen Hohlraum des jeweiligen Behälters (B) sich selbst überlassen wird.

2. Verfahren zur verbrauchsfertigen Verpackung von Speisequark in Behälter (B), wobei die zu fermentierende Milch bzgl. ihrer Inhaltsstoffe eingestellt und vorkonzentriert wird,
**dadurch gekennzeichnet,**
**dass** die vorkonzentrierte Milch unmittelbar vor ihrer Abfüllung mit Lab und Fermentationskulturen versetzt und durchmischt in noch flüssiger Form in permeable Behältnisse (B') dosiert abgefüllt, die gefüllten Behältnisse (B') jeweils in auf einer FFS-Verpackungsmaschine in eine getaktet geförderte Packstoffbahn (PB) ausgeformte Behälter (B) eingebracht und die in der Packstoffbahn noch zusammenhängenden Behälter mit einer Deckfolie verschlossen werden und die im jeweiligen Behältnis (B') befindliche Füllung in den einzeln oder in Gruppen von der Packstoffbahn abgetrennten verschlossenen Behältern (B) zur Absetzung der noch enthaltenen Molke in einen durch die permeablen Behältnisse (B') abgeteilten, bodenseitigen Hohlraum der Behälter (B) sich selbst überlassen wird.

3. FFS-Verpackungsmaschine zur Durchführung des Verfahrens nach Anspruch 1, bestehend aus einer Packstoffbahnförderstrecke (PF), längs der in Förderrichtung eine Formstation (F), eine Füllstation (F') und eine Schließstation (S) für die Aufbringung einer Deckfolienbahn (DB) angeordnet sind,
**dadurch gekennzeichnet,**
**dass** zwischen der Formstation (F) und der Füllstation (F') eine Zwischenstation (Z) für die getaktete Einbringung der permeablen Trennwände (5) in die Behälter (B) angeordnet ist.

4. FFS-Verpackungsmaschine zur Durchführung des Verfahrens nach Anspruch 2, bestehend aus einer Packstoffbahnförderstrecke (PF), längs der in Förderrichtung eine Formstation (F), eine Füllstation (F') und eine Schließstation (S) für die Aufbringung einer Deckfolienbahn (DB) angeordnet sind,
**dadurch gekennzeichnet,**
**dass** der Füllstation (F') eine Schlauchbeutelverpackungsmaschine (SBV) für die Herstellung und Befüllung der Behältnisse (B') zugeordnet ist und zwischen dieser und der Füllstation (F') Einrichtungen (E) zur Über- und Eingabe der Behältnisse (B') in die Behälter (B) der Packstoffbahn (PB) angeordnet sind.

5. FFS-Verpackungsmaschine nach Anspruch 3 oder 4,
**dadurch gekennzeichnet,**
**daß** die Formstation (F) zur Ausformung eines bodenseitigen Hohl- bzw. Sammelraumes (5) in den Behältern (B) ausgebildet ist.

6. An einer getaktet-kontinuierlich geförderten Packstoffbahn (PB) ausgeformte, becher- oder schalenförmige Behälter (B) zur Durchführung der Verfahren nach den Patentansprüchen 1 oder 2,
**dadurch gekennzeichnet,**
**daß** bodenseitig an den Behältern (B) ein Hohl- bzw. Flüssigkeitssammelraum (5) ausgebildet und dieser gegen das die Füllung aufnehmende Volumen (V) kleinere Flüssigkeitssammelraum (5) flüssigkeitsdurchlässig abgeschirmt ausgebildet ist.

7. Behälter nach Anspruch 6,
**dadurch gekennzeichnet,**
**daß** die Abschirmung des Flüssigkeitssammelraumes (5) gegen das Füllvolumen (V) des Behälters durch eine permeable Trennwand (6) oder ein permeables, die eigentliche Füllung enthaltendes Behältnis (B') gebildet ist.

8. Behälter nach Anspruch 6 oder 7,
**dadurch gekennzeichnet,**
**daß** der aus dem Boden (4) ausgeformte Hohlraum (5) in mehrere entsprechend kleinere Hohlräume (5') gegliedert ausgebildet ist.

9. Behälter nach einem der Anspruche 6 bis 8,
**dadurch gekennzeichnet,**
**daß** der den Hohlraum (5) nach unten abschließende Boden (4') mit Teilbereiche der Trennwand (6) oder das Behältnis (6') tragenden Ausformungen (7) versehen ist.

10. Behälter nach einem der Ansprüche 6 bis 9,
**dadurch gekennzeichnet,**
**daß** der Behälter (B) zwischen dem Aufnahmevolumen (V) und dem Hohlraum (5) mit einer umlaufenden Stufe (8) für die Randauflage der permeablen Trennwand (6) oder des Behältnisses (6') versehen ist.

11. Behälter nach Anspruch 7,
**dadurch gekennzeichnet,**
**daß** die permeable Trennwand (6) mindestens punktuell oder mindestens mit ihren Rändern im Behälter (B) fixiert ist.

12. Behälter nach Anspruch 7,
**dadurch gekennzeichnet,**
**daß** die permeable Trennwand (6) als lose in den Behälter (B) einbringbarer Einsatz (10) mit Distanzhalteelementen (11) versehen ist und der Einsatz (10) im Behälter (B) den Hohl- bzw. Sammelraum (5) definiert.

13. Behälter nach Anspruch 7,
**dadurch gekennzeichnet,**
**daß** die permeable Trennwand (6) in einem Teilbereich (12) ihrer Fläche (F) luftundurchlässig ausgebildet ist.

14. Behälter nach einem der Ansprüche 6 bis 13,
**dadurch gekennzeichnet,**
**daß** die den Flüssigkeitssammelraum (5) gegen das Füllvolumen (V) des Behälters (B) permeable Abschirmung aus Vliesmaterial gebildet ist.
